# EUROPEAN PATENT SPECIFICATION

(11) **EP 0 685 698 B1**
(45) Date of publication and mention of the grant of the patent: **31.03.1999**
(21) Application number: 95303625.8
(22) Date of filing: 26.05.1995
(51) Int. Cl.: F28D 1/053

(54) **Heat exchanger and gas burner assembly**
Wärmetauscher und Gasbrenner Einheit
Unité comprenant un échangeur de chaleur et un brûleur à gaz

(30) Priority: 01.06.1994 GB 9410928; 16.01.1995 GB 9500778
(43) Date of publication of application: 06.12.1995
(60) Divisional application: 98200766.8
(73) Proprietor: Caradon Ideal Limited, Hull, North Humberside HU5 4JN (GB)
(72) Inventor: Bratley, Roy, Hessle, Hull HU13 0HP (GB)
(74) Representative: Lerwill, John

(56) References cited:
- EP-A- 0 027 055
- EP-A- 0 063 079
- EP-A- 0 470 053

## Description

This invention relates to an assembly comprising a heat exchanger and a gas burner comprising the features of the preamble of claim 1. Such an assembly is known from EP-A-0 027 055 and are used in so-called condensing boilers.

Known in the prior art are gas boilers having a cylindrical burner surrounded by an annular heat exchanger enclosing a combustion chamber in which the burner is centrally located. The heat exchanger can comprise several conduits or tubes for conducting the water to be heated extending substantially parallel to the axis of the burner between headers or manifolds located at the opposite ends of the heat exchanger. The tubes are generally equipped with fins or the like to increase the surface area available for heat exchange with the hot flue gases flowing from the combustion chamber between the tubes.

In recent times condensing boilers which operate with greater efficiency by extracting more heat from the flue gases, in particular by lowering the temperature of the gases below their dew point, have become popular. With such boilers the condensation occurring within the heat exchanger calls for some means of draining the condensation away, and if the drainage means should become blocked for any reason the build up of condensate can cause the boiler to malfunction. EP-A-0027055 relates to a gas boiler including a condensate drain. EP-A-0470053 provides a gas boiler with a horizontal burner, and a combustion chamber connected to the flue via a condensate collection chamber.

The present invention addresses this issue and provides an assembly comprising a heat exchanger and a gas burner for a condensing boiler, the heat exchanger comprising several tubes for conducting liquid through the heat exchanger, upper and lower headers between which the tubes extend, a sump chamber defined below the lower header for collection of condensate, and an overflow channel leading from the sump chamber to an overflow chamber, characterised in that a detector is positioned to sense condensate in the overflow chamber when the exit to the sump chamber is blocked and to sense a burner flame issuing from the burner.

If the drain from the sump should become blocked for any reason, causing build up of condensate in the sump and eventual overflow into the overflow chamber, the flame detector senses the presence of water in this latter chamber and provides a signal to which the boiler controls can react by shutting down the boiler. Advantageously, the flame detector serves as a flame detector and a condensate detector, thereby the construction and assembly of the boiler, are simplified. Conveniently, the overflow chamber is defined by a base plate carrying the burner and the lower header. The overflow channel can be defined between the sump and lower header and be arranged to drain condensate from the overflow chamber back into the sump when the blockage has been cleared in the drain from the sump. The overflow channel is preferably of restricted through flow area to minimise the possible flow of hot flue gas out through the condensate drain via the sump, the overflow chamber being in free communication with the combustion chamber.

Preferably the upper surface of the lower header is arranged to collect condensate and to deliver condensate into the sump chamber through a drain outlet. In an especially convenient construction the lower header is of substantially rectangular configuration, e.g. square, and has a drain outlet hole located in the region of one or more corners thereof. The lower header can be made as a metal casting and can be provided with a continuous peripheral rim on its upper side to avoid condensate flowing over the outer edge thereof. The condensate can be discharged from the sump by any convenient drainage system, such as a siphon system.

Substantially horizontal fins may be attached to the tubes, and means may be connected to the fins and extending downwardly therefrom to define a predetermined drainage path for condensate formed on the fins.

The means provide for drainage from the fin surfaces and thereby discouraging creation of condensate films covering these surfaces, and the means may take various specific forms.

A clear understanding of the invention in its different aspects will be gained from the following more detailed description, reference being made to the accompanying drawings, in which:-
Figure 1 is a front elevation of a heat exchanger for a gas boiler, constructed in accordance with the invention;
Figure 2 is a side elevation of the heat exchanger shown with the gas burner assembled therewith;
Figure 3 is a horizontal cross section through the heat exchanger of Figure 2;
Figures 4A and 4B are side and plan views of one particular form of heat exchanger segment;
Figures 5A and 5B are side and plan views of the second form of heat exchanger segment;
Figures 6A and 6B are side and plan views of a third form of heat exchanger segment;
Figure 6C is a plan view showing a modified form of the fin plate of Fig. 6B;
Figure 6D is an enlarged plan view showing the region of one of the water tube holes in the fin plate of Fig. 6C;
Figure 6E is an enlarged plan view showing the configuration of one of the fin edge tabs of the fin plate of Fig. 6C;
Figure 6F is an enlarged partial cross-section showing the positioning of the additional tabs in relation to the water tubes in the assembled heat exchanger.
Figure 7 is an underneath plan view of the heat exchanger;

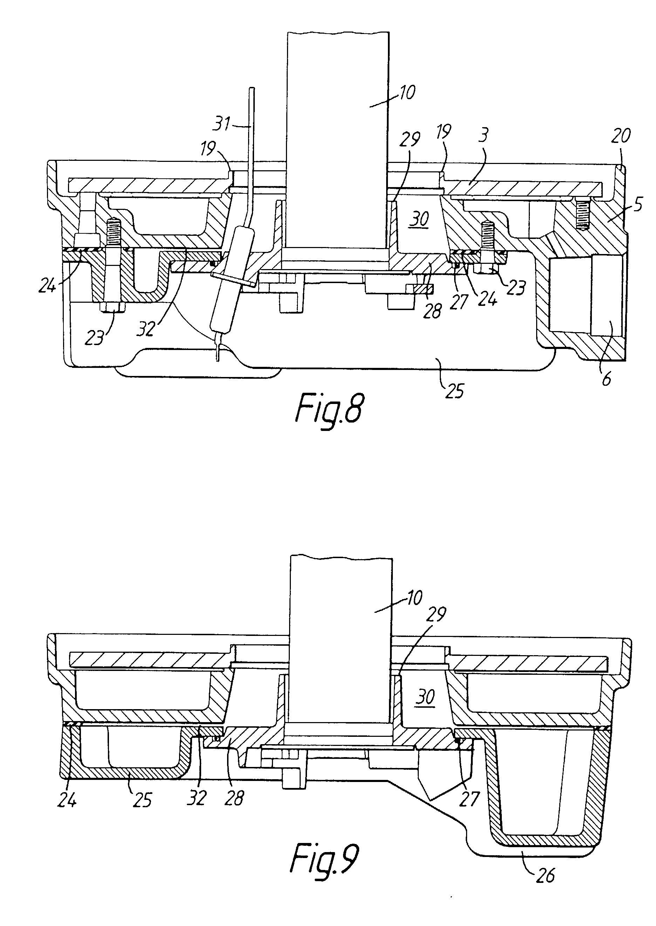

Figure 8 is a partial cross-section taken along the line VIII-VIII in Figure 7; and
Figure 9 is a partial cross-section taken along the line IX-IX of Figure 7.

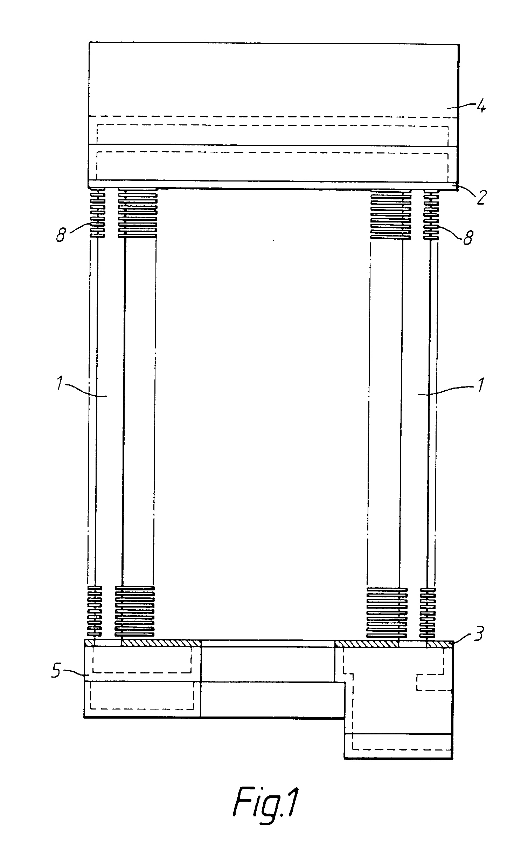

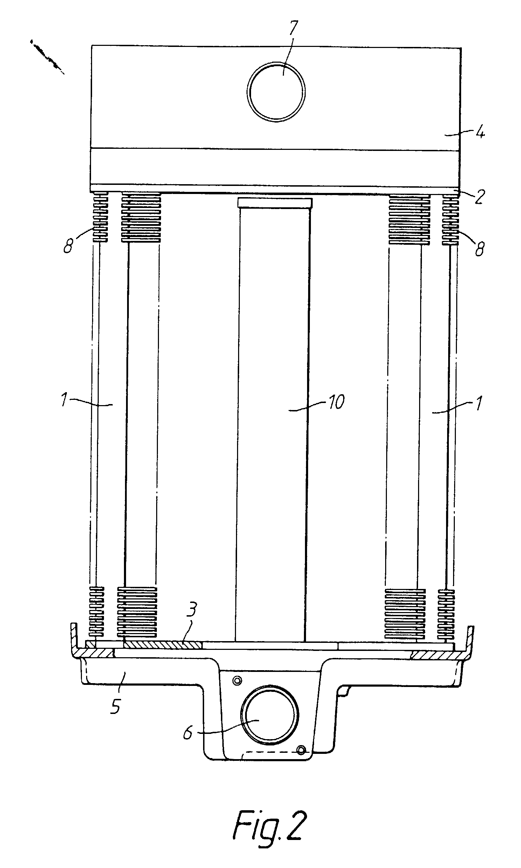

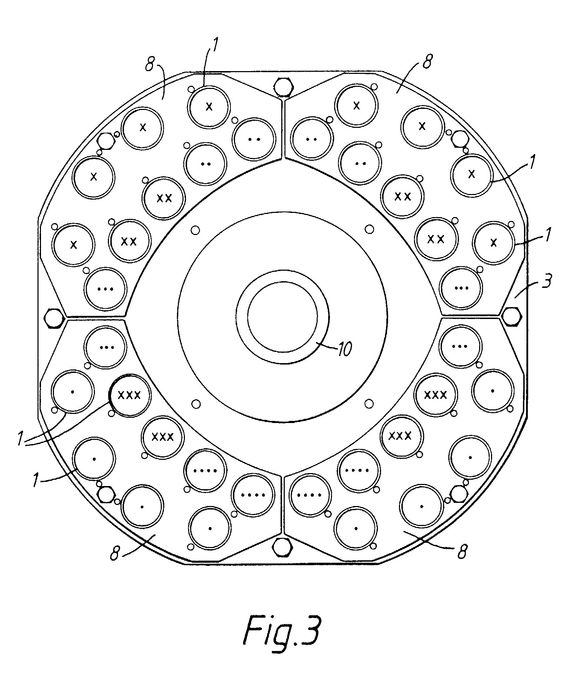

The heat exchanger and gas burner assembly illustrated in Figures 1 to 3 is suitable for a domestic gas boiler. The heat exchanger includes several parallel metal tubes 1 arranged in an annular array and fastened between upper and lower tube end plates 2,3. The tube end plates are respectively secured and sealed to upper and lower headers 4,5 to confine within the headers chambers for conducting water to and from the tubes as explained in more detail below. The lower header includes a water inlet 6 for entry of water to be heated into the heat exchanger, and the upper header includes a water outlet 7 for hot water having flowed through the heat exchanger and been heated. The tubes are fitted with fins 8 which in well known manner serve to increase the surface area for heat exchange with hot flue gases passing between the tubes 1. The fins are mounted over the full height of the tubes 1 and are only partially shown in Figures 1 and 2. For convenience the assembly of tubes, end plates and fins is manufactured as four equal segments. Each heat exchanger segment includes nine tubes with their axes disposed in two arcuate rows, as best seen in Figure 3, there being five tubes in the inner row and four tubes in the outer row. Each fin plate in each segment surrounds all the tubes of this segment, these fin plates being substantially horizontal in the assembled heat exchanger. The fin plates may be fitted frictionally to the tubes or may be fixed thereon such as by soldering. The upper and lower headers are shaped to form chambers communicating with the tube ends to provide a predetermined flow path for water through the the heat exchanger. In particular, the incoming cold water first flows upwardly through the four outer tubes (.) of each of the two lower segments as viewed in Figure 3, it is then transferred by the upper header and flows downwardly through the four outer tubes (x) of each of the two upper segments of Figure 3. Upon reaching the lower header again the water is transferred to flow upwardly through the neighbouring adjacent two of the inner tubes (..) of the two upper segments in Figure 3, following which the water is transferred by the upper header to flow downwardly through the next adjacent pairs of inner tubes (xx) of the two upper segments. The water is then directed by the lower header to flow upwardly through the adjacent inner tubes (...) of the upper and lower segments as viewed in Figure 3, and is subsequently directed to flow downwardly through intermediate adjacent tubes (xxx) of each lower segment, and finally is directed by the lower header to pass upwardly through the neighbouring adjacent pairs of inner tubes (....) of the two lower segments, whereafter the water passes out through the outlet of the upper header. Thus it will be appreciated that each drop of water is constrained to make seven passes along the heat exchanger tubes in flowing from the inlet 6 to the outlet 7. Of course a greater or smaller number of tubes could be used with the chambers in the headers arranged accordingly, and if desired the water may be constrained to make more or less than seven passes along the tubes in flowing through the heat exchanger.

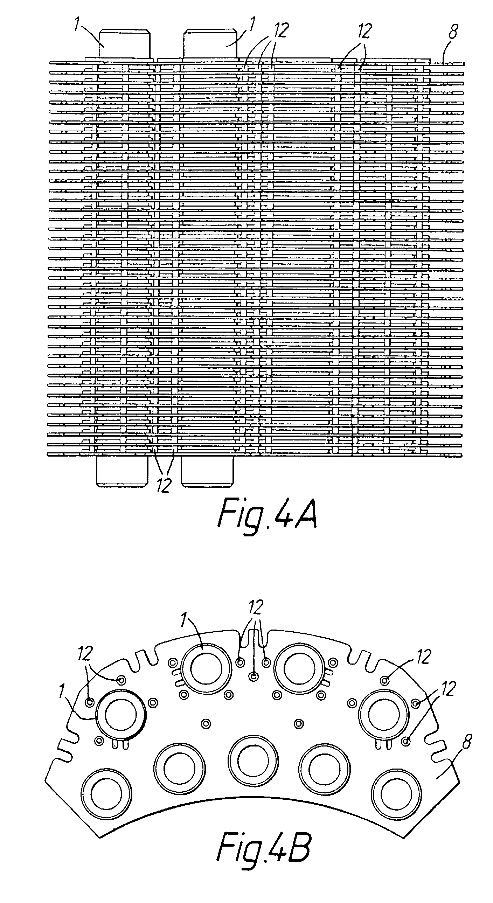

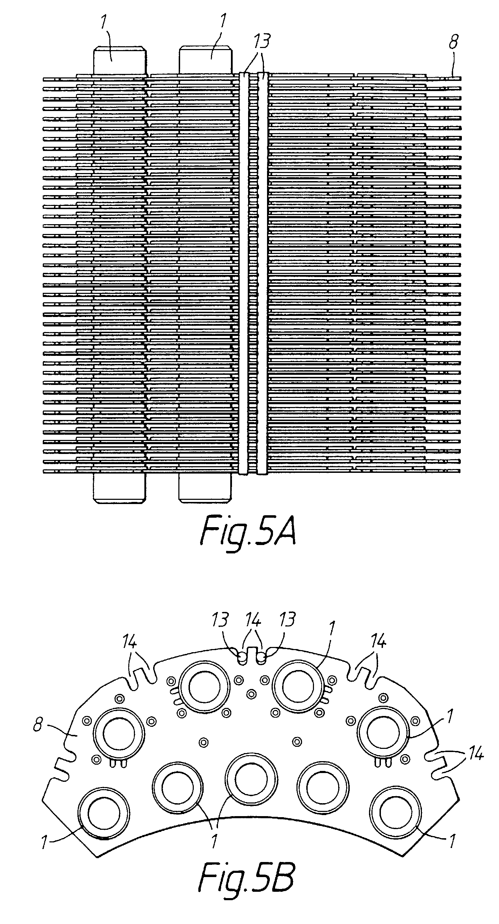

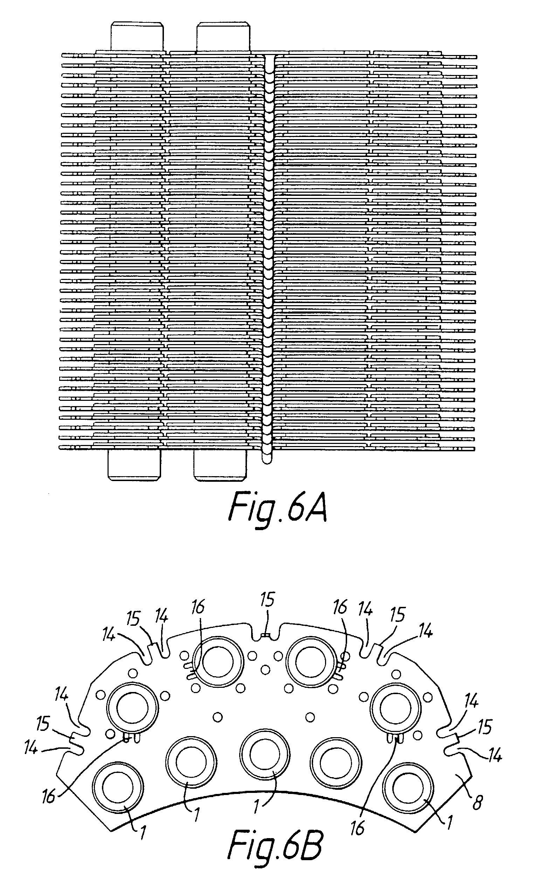

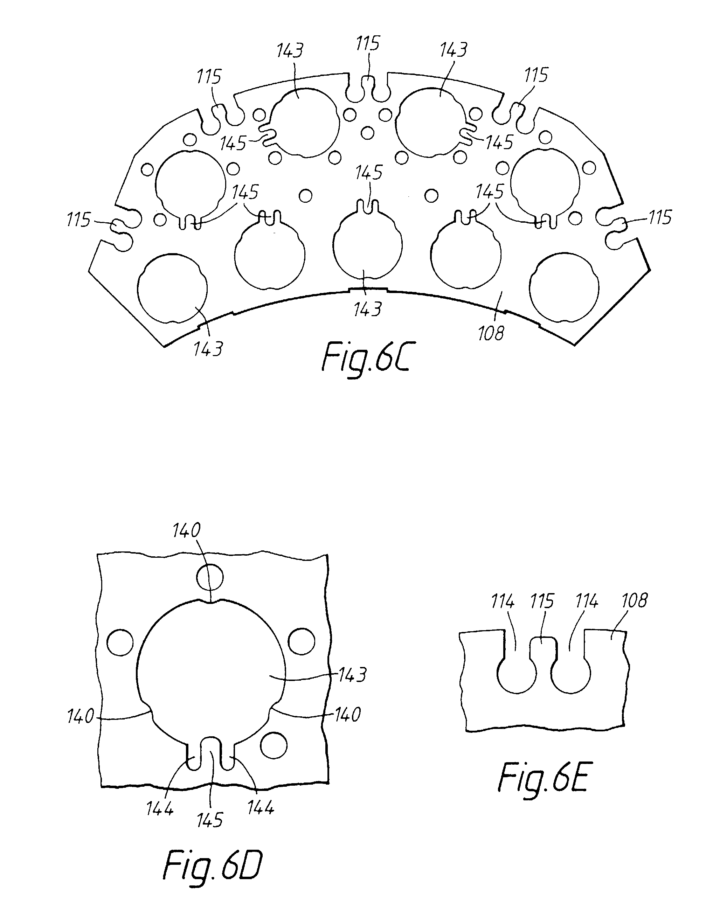

The heat exchanger is of annular form enclosing a central combustion chamber wherein a cylindrical burner 10 is disposed. The outer contour of the heat exchanger is defined by the fins and end plates (see Figure 3) is generally circular with flat sides allowing the heat exchanger to be housed in a substantially square casing whereby corner spaces are defined within the casing to form flue ducts extending along the heat exchanger and into which the flue gas passes by flowing between the fins 8 from the combustion chamber. On passing through the fin interspaces, the flue gases give up their heat and become cooled. The heat transfer efficiency is such that the flue gases can at least under some operating conditions be reduced in temperature to below the dew point and moisture then condenses out on the surfaces of the fins. As the temperature of the fins will be lowest adjacent their outer edges, due to the outer tubes carrying the coolest water, condensate is most likely to be formed on the outer portions of the fins and around the outer tubes 1. To prevent the condensate accumulating on the fin surfaces and forming a film or layer of water thereon, which would act as a thermal insulator and hence reduce the efficiency of the heat exchange with the flue gases, means are provided in association with the fins to facilitate rapid removal of condensate to the lower region of the heat exchanger below the inter-fin flue gas passages. This means may take different specific forms. In Figures 4A and 4B there is shown an arrangement of a heat exchanger segment in which several rods 12 are arranged to extend vertically through aligned holes in the fins 8. The rods 12 extend continuously at least from the uppermost fin to below the lowermost fin. The rods contact the fins but do not fill the cross-section of the holes in the fins so that gaps are left through which water drops can pass. Under normal surface tension effects, the condensate collecting on the upper surface of a fin will be drawn towards a rod adjacent to which a liquid drop will form until it is large enough to run down along the rod under its own weight due to gravity. As clearly shown in Figure 4B, the rods are disposed in clusters of four around the outer water tubes 1, and three additional rods are located at intermediate positions spaced at greater distances from the water tubes. All the rods are positioned between the inner water tubes and the outer edge of the fins. (In the interest of clarity only two water tubes have been included in Figure 4A, which also applies to Figures 5A and 6A).

In the arrangement shown in Figures 5A and 5B, instead of solid rods elongate wicks 13 are arranged to extend longitudinally of the heat exchanger. Although the wicks could be located as described above in relation to the rods, there are shown two wicks positioned at the outer peripheral edge of the fins. The wicks are inserted into slots 14 which may be conveniently provided at the time of pressing the metal fins. The wicks, due to their natural absorbency and ability to conduct liquid provide an effective means of removing condensate from the fin surfaces. Of course, it is not necessary for a single pair of adjacent wicks to be provided in each heat exchanger segment and additional wicks could for example be inserted in any one or more of the further slots 14 shown formed in the fins in Figure 5B.

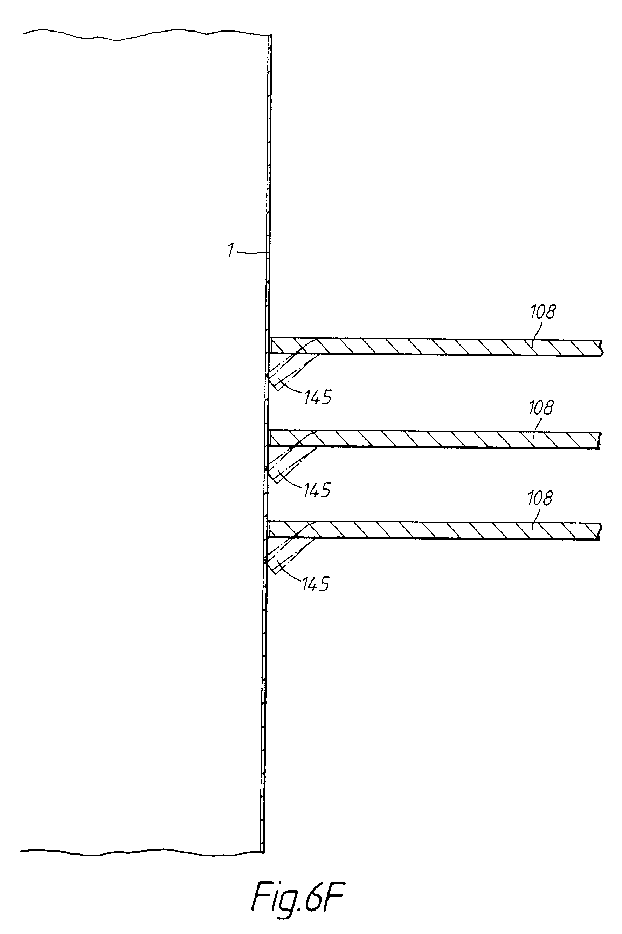

The fins in the arrangement of Figures 6A and 6B are provided with tabs 15 at the outer edges, these tabs being conveniently formed by slots 14 produced at the time of manufacture of the fins by pressing from metal sheet. The corresponding tabs of all the fins are bent downwardly, so that the deflected tabs define a flow path for water condensing on the fin surfaces. The water is drawn by surface tension towards the tabs and runs down the continuous flow path defined by the tabs. Each tab may be deflected so that it contacts the next tab below, but this is not essential since if gaps are left it merely means that drops of water will collect at the extremities of the tabs and then fall away when they have grown large enough for their weight to overcome the surface tension forces. The fins are shown provided with additional tabs 16 located adjacent those radially outer tubes 1 which carry the cooler water during its passage through the heat exchanger. Illustrated in Figure 6C is a modified fin plate 108 formed with a plurality of tabs 115 at its outer edge. At least one and preferably all of these tabs are deflected downwardly in the assembled heat exchanger so that the aligned deflected tabs define a drainage path for conducting condensate to the lower part of the heat exchanger. As shown in Figure 6E, each tab 115 is defined by a pair of adjacent notches 114 shaped as a circular hole connected to the fin edge by a slot of width less than the hole diameter so that the tab has a waisted neck portion, which may assist in drawing water onto the tab. Around the periphery of each water tube hole 143 are small protrusions 140 for providing a loose interference fit between the fin plate and the tube. Furthermore, additional condensate drainage tabs 145 are provided at the periphery of at least some of the holes. As shown all the holes for the outer tubes, and the holes for the three medial inner tubes are equipped with additional tabs 145. Each tab is defined by a pair of parallel slots 144 and is formed with such a length that its free end projects into the tube hole so that when the tube 1 is inserted, the tab is deflected downwardly and rests with its free end abutting the tube surface as shown in Figure 6F. Consequently, these downwardly deflected tabs 145 combine with the tubes 1 to define drainage paths for conducting condensate from the fins to the lower region of the heat exchanger. It will be noted that the tabs 145 associated with the outer tubes are positioned so that they are distributed over an outer portion of the fin plate, and the tabs 145 associated with the inner tubes are located at the outer, i.e. cooler, side of these tubes.

It should be understood that the arrangements of Figures 4 to 6 would be combined in the same heat exchanger. For example, the fins illustrated in Figure 6B or 6C could have one or more rods inserted through the holes shown, and/or one or more wicks could be inserted in the slots 14 or 114 flanking tabs 15 or 115 which have not been downwardly deflected. Of course, additional ones of the tabs not shown bent downwardly in Figure 6B could be deflected to form flow paths for condensate removal and preferably all the tabs are bent down to achieve maximum drainage.

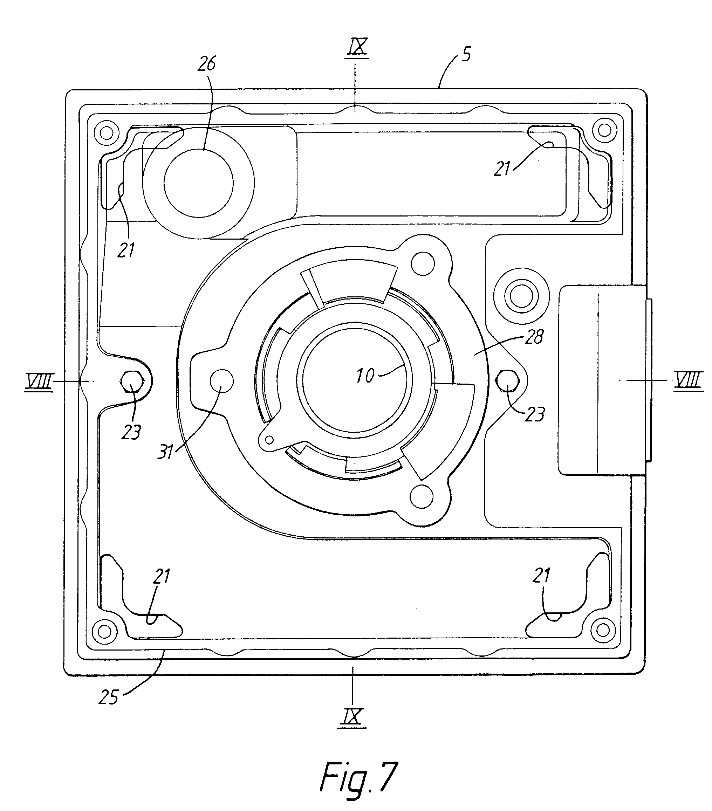

When the condensate reaches the lower end of the heat exchanger it collects on the upper surface of the lower header 5 which has a rim 20 extending around its periphery to prevent condensate flowing in uncontrolled manner over the edge of the header. In the corner regions, radially outside of the tubes 1 and fins 8 and at the lower ends of the corner flue ducts mentioned above, the header 5 is formed with through holes 21 which serve as drain outlets for the condensate water. The lower tube plate 3 is provided with an upwardly directed lip 19 at its inner edge so that condensate will rim off the upper surface of this tube plate in the direction of its outer edges and hence generally towards the drain holes 21. Firmly fixed to the underside of the header 5 by bolts 23, and sealed to the header by an intervening gasket 24 is a sump 25. (In Figure 7 the underside of the header 5 is shown with the sump 25 superimposed thereon.) The sump is generally of a U-shape to extend around three sides of the header 5, but to cover all four drain holes 21 of the header. The sump defines a chamber for collection of condensate draining through the holes 21, and for discharging the collected condensate it is formed with a downwardly opening outlet 26.

Mounted to the underside of the sump 25 and sealed to it by an 0-ring seal 27 is a central base plate 28 mounting the burner 10. This burner mounting plate has an upstanding central boss 29 which serves to locate the burner, and which also defines an inner wall of an annular overflow chamber 30, the outer and bottom walls of which are respectively formed by the header 5 and a flange portion of the base plate. The burner is shown fitted within the boss 29, but it can instead fit over the outside of the boss. It is not essential for the burner mounting plate to include the central boss and in a modified construction the burner is connected to the upper face of the burning mounting plate by a flange ring and a lower end part of the burner defines the inner wall of the overflow chamber. Supported by the base plate and extending upwardly through the overflow chamber 30 is a flame sensor probe 31, which also serves as a condensate level sensor. The upper tip portion of the probe is located alongside the burner for detecting the presence of a flame, the probe being connected electrically to the boiler controls as well known in the art.

At a certain location the gasket 24 is interrupted to define between the sump chamber and the overflow chamber 30 an overflow channel 32. Should the interior of the sump chamber become filled with water, such as due to a blockage in the drain passage through which water normally passes from the sump, further flow of condensate into the sump from the heat exchanger results in water entering the overflow chamber 30 via the channel 32. When the water reaches a certain level in this overflow chamber it is detected by the probe 31 which provides a signal to the boiler controls indicating a malfunction so that the boiler will be shut down. When the fault has been rectified and water starts to drain away from the sump again, the water in the overflow chamber passes back into the sump chamber through the connecting channel 32. In order to minimise the loss of hot flue gas from the combustion chamber by flowing out through the water drain via the channel 32, it is preferable for this channel to have a restricted through flow area.

From the foregoing description it will be understood that the heat exchanger assembly of the invention provides safeguards in the event of a drain malfunction, with effective means for removing condensate water, and thereby allows the heat exchanger to be operated effectively and very efficiently in a condensing mode. The preferred use of a common probe for flame detection and detection of condensate in the overflow chamber simplifies the construction and reduces manufacturing costs, the use of a common probe being made possible by the arrangement of the overflow chamber adjacent the burner.

## Claims

1. An assembly comprising a heat exchanger and a gas burner (10) for a condensing boiler, the heat exchanger comprising several tubes (1) for conducting liquid through the heat exchanger, upper and lower headers (4,5) between which the tubes extend, a sump chamber defined below the lower header (5) for collection of condensate, and an overflow channel (32) leading from the sump chamber to an overflow chamber (30), characterised in that a detector is positioned to sense condensate in the overflow chamber when the exit to the sump chamber is blocked and to sense a burner flame issuing from the burner.

2. The assembly according to claim 1, wherein the tubes (1) are arranged around a combustion chamber; the burner is disposed in the combustion chamber, and the lower header and sump chamber are arranged to be spaced outwardly, of the burner

3. The assembly according to claim 1 or 2, wherein the overflow chamber (30) is at least partly defined by a burner mounting plate (28).

4. The assembly according to claim 3, wherein the flame detector (31) is supported by the burner mounting plate (28) and projects upwardly through the overflow chamber (30).

5. The assembly according to any one of the preceding claims, wherein the overflow chamber (30) has a circumferential wall defined by the lower header (5).

6. The assembly according to any one of claims 1 to 5, wherein the overflow channel is defined between the lower header (5) and a sump member (25) defining the sump chamber.

7. The assembly according to any one of the preceding claims, wherein the overflow channel (32) is arranged to drain condensate from the overflow chamber (30) into the sump chamber.

8. The assembly according to any one of the preceding claims wherein the upper surface of the lower header (5) is arranged to collect condensate and to deliver condensate into the sump chamber.

9. The assembly according to claim 8, wherein the lower header (5) has a hole (21) through which condensate collected by the header drains into the sump chamber.

10. The assembly according to claim 9, wherein the lower header (5) is of substantially rectangular configuration and the hole (21) is located in the region of one or more corners thereof.

11. The assembly according to claim 8, 9 or 10, wherein the lower header (5) has an upstanding rim (20) extending around the periphery of the upper surface thereof.

12. The assembly according to any one of claims 8 to 11, wherein the tubes (1) are mounted to the lower header (5) by an annular tube plate (3), and said tube plate has an upwardly directed lip (19) adjacent the inner edge thereof so that condensate will run off the tube plate onto the lower header at the outer edge of the tube plate.

13. The assembly according to any one of claims 6 to 12, wherein the sump member (25) is generally U-shaped to facilitate mounting of the gas burner (10) generally centrally through the sump.

14. The assembly according to claim 13, wherein the burner (10) is carried by a mounting plate (28) secured to the underside of the sump member (25).

15. The assembly according to any one of the preceding claims, wherein substantially horizontal fins (8) are attached to the tubes, and means (12;13;15) are connected to the fins extend downwardly therefrom to define a predetermined drainage path for condensate formed on the fins.

16. The assembly according to claim 15, wherein said means comprise one or more continuous elongate members (12;13) extending generally in the direction of the tubes.

17. The assembly according to claim 16, wherein the elongate members comprise at least one rod (12) passing through aligned holes in the fins and in contact with the fins at the edges of the holes.

18. The assembly according to claim 16 or 17, wherein the elongate members comprise at least one wick.

19. The assembly according to any one of claims 15 to 18, wherein said means comprise tabs (15;16;115;145) defined by the fins and deflected out of the planes thereof for aligned tabs of adjacent fins to define a drainage path.

20. The assembly according to claim 19, wherein each tab (15;16;115;145) is defined by a pair of slots (14;114;144).

21. The assembly according to claim 19 or 20, wherein the fins have at least one tab at their outer edges.

22. The assembly according to any one of claims 19, 20 or 21, wherein the fins have at least one tab (16;145) formed at the edge of a hole (143) through which a tube (1) passes.

23. The assembly according to claim 22, wherein said at least one tab (16;145) is formed to project into the hole (143) and is deflect by insertion of the tube (1) through the hole (143).

## Patentansprüche

1. Vorrichtung mit Wärmetauscher und Gasbrenner (10), wobei der Wärmetauscher umfaßt: mehrere Rohre (1) zur Flüssigkeitsleitung durch den Wärmetauscher hindurch, einen oberen und einen unteren Sammler (4, 5), zwischen denen die Rohre verlaufen, eine Auffangkammer unter dem unteren Sammler (5) zum Auffangen des Kondensats sowie einen Überlaufkanal (32), der von der Auffangkammer zu einer Überlaufkammer (30) führt, **dadurch gekennzeichnet, daß** ein Detektor vorgesehen ist, um Kondensat in der Überlaufkammer festzustellen, wenn der Abfluß zur Auffangkammer blockiert ist, und um eine von dem Brenner ausgehende Brennerflamme zu erfassen.

2. Vorrichtung nach Anspruch 1, wobei die Rohre (1) um eine Brennkammer herum angeordnet sind, der Brenner in der Brennkammer vorgesehen ist und der untere Sammler sowie die Auffangkammer so angeordnet sind, daß sie zum Brenner nach außen beabstandet sind.

3. Vorrichtung nach Anspruch 1 oder 2, wobei die Überlaufkammer (30) zumindest teilweise von einer Brenneranbringungsplatte (28) gebildet wird.

4. Vorrichtung nach Anspruch 3, wobei der Flammendetektor (31) von der Brenneranbringungsplatte (28) gehalten wird und durch die Überlaufkammer (30) hindurch nach oben herausragt.

5. Vorrichtung nach einem der vorangehenden Ansprüche, wobei die Überlaufkammer (30) eine Umfangswand hat, die von dem unteren Sammler (5) gebildet wird.

6. Vorrichtung nach einem der vorangehenden Ansprüche 1 bis 5, wobei der Überlaufkanal zwischen dem unteren Sammler (5) und einem Auffangelement (25) begrenzt wird, welches die Auffangkammer bildet.

7. Vorrichtung nach einem der vorangehenden Ansprüche, wobei der Überlaufkanal (32) so angeordnet ist, daß das Kondensat aus der Überlaufkammer (30) in die Auffangkammer ablaufen kann.

8. Vorrichtung nach einem der vorangehenden Ansprüche, wobei die Oberseite des unteren Sammlers (5) so angeordnet ist, daß sie Kondensat auffängt und Kondensat in die Auffangkammer abgibt.

9. Vorrichtung nach Anspruch 8, wobei der untere Sammler (5) ein Loch (21) aufweist, durch welches vom Sammler aufgefangenes Kondensat in die Auffangkammer abläuft.

10. Vorrichtung nach Anspruch 9, wobei der untere Sammler (5) im wesentlichen rechtwinklig ist und sich das Loch (21) in dem Bereich von einer oder mehrerer seiner Ecken befindet.

11. Vorrichtung nach Anspruch 8, 9 oder 10, wobei der untere Sammler (5) einen hochstehenden Rand hat, der sich um dessen Außenumfang erstreckt.

12. Vorrichtung nach einem der Ansprüche 8 bis 11, wobei die Rohre (1) mit Hilfe eines ringförmigen Rohrbodens (3) am unteren Sammler (5) angebracht sind und der Rohrboden neben seinem Innenrand eine nach oben gerichtete Lippe (19) hat, so daß am Außenrand des Rohrbodens Kondensat vom Rohrboden auf den unteren Sammler herunterläuft.

13. Vorrichtung nach einem der Ansprüche 6 bis 12, wobei das Auffangelement (25) allgemein U-förmig ist, damit das Befestigen des Gasbrenners (10) weitgehend mittig durch den Auffang hindurch erleichtert wird.

14. Vorrichtung nach Anspruch 13, wobei der Brenner (10) von einer Befestigungsplatte (28) getragen wird, die an der Unterseite des Auffangelements (25) angebracht ist.

15. Vorrichtung nach einem der vorangehenden Ansprüche, wobei im wesentlichen horizontale Rippen (8) an den Rohren angebracht sind und Einrichtungen (12; 13; 15) mit den Rippen verbunden sind und von ihnen nach unten verlaufen, so daß ein vorgegebener Ablaufweg für auf den Rippen gebildetes Kondensat entsteht.

16. Vorrichtung nach Anspruch 15, wobei die Einrichtungen ein oder mehrere kontinuierliche, längliche Elemente (12; 13) umfassen, die allgemein in Richtung der Rohre verlaufen.

17. Vorrichtung nach Anspruch 16, wobei die länglichen Elemente zumindest einen Stab (12) umfassen, welcher durch die zueinander ausgerichteten Löcher in den Rippen verläuft und die Rippen an den Rändern der Löcher berührt.

18. Vorrichtung nach Anspruch 16 oder 17, wobei die länglichen Elemente zumindest einen Docht umfassen.

19. Vorrichtung nach einem der Ansprüche 15 bis 18, wobei die Einrichtungen Vorsprünge (15; 16; 115; 145) umfassen, die von den Rippen gebildet und von deren Ebenen abgelenkt werden, damit axial ausgerichtete Vorsprünge benachbarter Rippen einen Ablaufweg definieren.

20. Vorrichtung nach Anspruch 19, wobei jeder Vorsprung (15; 16; 115; 145) von einem Paar Schlitze (14; 114; 144) abgegrenzt wird.

21. Vorrichtung nach Anspruch 19 oder 20, wobei die Rippen mindestens einen Vorsprung am Außenrand aufweisen.

22. Vorrichtung nach einem der Ansprüche 19, 20 oder 21, wobei die Rippen mindestens einen Vorsprung (16; 145) am Rand eines Loches (143) haben, durch das ein Rohr (1) verläuft.

23. Vorrichtung nach Anspruch 22, wobei der mindestens eine Vorsprung (16; 145) so ausgebildet ist, daß er in das Loch (143) hineinragt und infolge des Einsetzens des Rohres (1) in das Loch (143) abgelenkt wird.

## Revendications

1. Ensemble comportant un échangeur de chaleur et un brûleur à gaz (10) pour une chaudière à condensation, l'échangeur de chaleur comportant plusieurs tubes (1) pour conduire du liquide à travers l'échangeur de chaleur, des collecteurs supérieur et inférieur (4, 5) entre lesquels s'étendent les tubes, une chambre de vidange définie en dessous du collecteur inférieur (5) pour recueillir du condensat, et un canal de trop-plein (32) conduisant de la chambre de vidange à une chambre de trop-plein (30), caractérisé en ce qu'un détecteur est positionné pour détecter le condensat situé dans la chambre de trop-plein lorsque la sortie vers la chambre de vidange est bloquée et pour détecter une flamme de brûleur provenant du brûleur.

2. Ensemble selon la revendication 1, dans lequel les tubes (1) sont agencés autour d'une chambre de combustion, le brûleur est agencé dans la chambre de combustion, et le collecteur inférieur et la chambre de vidange sont agencés pour être espacés vers l'extérieur par rapport au brûleur.

3. Ensemble selon la revendication 1 ou 2, dans lequel la chambre de trop-plein (30) est au moins partiellement définie par une plaque de montage de brûleur (28).

4. Ensemble selon la revendication 3, dans lequel le détecteur de flamme (31) est supporté par la plaque de montage de brûleur (28) et fait saillie vers le haut à travers la chambre de trop-plein (30).

5. Ensemble selon l'une quelconque des revendications précédentes, dans lequel la chambre de trop-plein (30) a une paroi circonférentielle définie par le collecteur inférieur (5).

6. Ensemble selon l'une quelconque des revendications 1 à 5, dans lequel le canal de trop-plein est défini entre le collecteur inférieur (5) et un élément de vidange (25) définissant la chambre de vidange.

7. Ensemble selon l'une quelconque des revendications précédentes, dans lequel le canal de trop-plein (32) est agencé pour drainer du condensat provenant de la chambre de trop-plein (30) jusque dans la chambre de vidange.

8. Ensemble selon l'une quelconque des revendications précédentes, dans lequel la surface supérieure du collecteur inférieur (5) est agencée pour collecter du condensat et pour envoyer du condensat dans la chambre de vidange.

9. Ensemble selon la revendication 8, dans lequel le collecteur inférieur (5) a un trou (21) à travers lequel le condensat collecté par le collecteur est drainé dans la chambre de vidange.

10. Ensemble selon la revendication 9, dans lequel le collecteur inférieur (5) a une configuration pratiquement rectangulaire et le trou (21) est situé dans la zone d'un ou plusieurs coins de celui-ci.

11. Ensemble selon la revendication 8, 9 ou 10, dans lequel le collecteur inférieur (5) a une nervure s'étendant vers le haut (20) s'étendant autour de la périphérie de sa surface supérieure.

12. Ensemble selon l'une quelconque des revendications 8 à 11, dans lequel les tubes (1) sont montés sur le collecteur inférieur (5) par une plaque tubulaire annulaire (3) et ladite plaque tubulaire a une lèvre dirigée vers le haut (19) adjacente à son bord intérieur de sorte que le condensat s'écoule en dehors de la plaque tubulaire sur le collecteur inférieur au niveau du bord extérieur de la plaque tubulaire.

13. Ensemble selon l'une quelconque des revendications 6 à 12, dans lequel l'élément de vidange (25) a de manière générale une forme de U pour faciliter le montage du brûleur à gaz (10) de manière générale au centre à travers la vidange.

14. Ensemble selon la revendication 13, dans lequel le brûleur (10) est supporté par une plaque de montage (28) fixée en dessous de l'élément de vidange (25).

15. Ensemble selon l'une quelconque des revendications précédentes, dans lequel des ailettes à peu près horizontales (8) sont fixées sur les tubes, et des moyens (12 ; 13 ; 15) sont reliés aux ailettes, s'étendant vers le bas à partir de celles-ci, pour définir un trajet de drainage prédéterminé pour le condensat formé sur les ailettes.

16. Ensemble selon la revendication 15, dans lequel lesdits moyens comportent un ou plusieurs éléments allongés continus (12 ; 13) s'étendant généralement dans la direction des tubes.

17. Ensemble selon la revendication 16, dans lequel les éléments allongés comportent au moins une tige (12) passant à travers des trous alignés des ailettes et venant en contact avec les ailettes au niveau des bords des trous.

18. Ensemble selon la revendication 16 ou 17, dans lequel les éléments allongés comportent au moins une mèche.

19. Ensemble selon l'une quelconque des revendications 15 à 18, dans lequel lesdits moyens comportent des pattes (15 ; 16 ; 115 ; 145) définies par les ailettes et déformées en dehors des plans de celles-ci pour aligner les pattes des ailettes adjacentes pour définir un trajet de drainage.

20. Ensemble selon la revendication 19, dans lequel chaque patte (15 ; 16 ; 115 ; 145) est définie par une paire de fentes (14 ; 114 ; 144).

21. Ensemble selon la revendication 19 ou 20, dans lequel les ailettes ont au moins une patte au niveau de leur bord extérieur.

22. Ensemble selon l'une quelconque des revendications 19, 20 ou 21, dans lequel les ailettes ont au moins une patte (16 ; 145) formée au niveau du bord d'un trou (143) à travers lequel passe un tube (1).

23. Ensemble selon la revendication 22, dans lequel ladite au moins une patte (16 ; 145) est formée pour faire saillie dans le trou (143) et est déformée par insertion du tube (1) à travers le trou (143).
